# EUROPEAN PATENT APPLICATION

(11) **EP 2 540 395 A2**
(43) Date of publication of application: **02.01.2013**
(21) Application number: 11747771.1
(22) Date of filing: 22.02.2011
(51) Int. Cl.: B01L 3/00

(54) **APPARATUS AND METHOD FOR DISTRIBUTING LIQUID SAMPLES IN SMALL VOLUMES**

(30) Priority: 22.02.2010 MX 2010002036
(71) Applicant: Barrenechea Oar, José Carlos, C. P. 11570 México D. F. (MX); Grande Gutierrez, Raúl, Delegación Miguel Hidalgo CP. 1 1570, México D.F. (MX)
(72) Inventor: Barrenechea Oar, José Carlos, C. P. 11570 México D. F. (MX); Grande Gutierrez, Raúl, Delegación Miguel Hidalgo CP. 1 1570, México D.F. (MX)
(74) Representative: Bublak, Wolfgang
(86) International application number: PCT/MX2011/000032
(87) International publication number: WO 2011/105884

(57) **Abstract**

Apparatus for distributing liquids in small sample volumes, comprising a preformed rigid duct of impermeable material, with one inlet and one or more outlets, characterized in that the duct dimensions vary along the same, forming communicating ducts, bifurcations and reservoirs; and a process for its manufacture.

## Description

### Field of the invention

The invention consists of a preformed rigid duct of impermeable material, with one inlet and one or more outlets wherein automatic distribution of sample liquids in reservoirs or compartments preformed in the same duct is achieved by the effects of gravity and air movement. The duct dimensions vary along the same, forming communicating ducts, reservoirs and sometimes bifurcations. The duct is located so that the inlet and the outlet or outlets is/are at an upper level and below thereof, two or more reservoirs which are identical or different to each other can be located:
A) INDEPENDENTLY: Each reservoir has a communicating duct between itself and the sample liquid inlet as well as an outlet duct for displaced air which reaches the top of the apparatus
B) BY FORMING SERIES: two or more reservoirs connected by means of ducts where not all said reservoirs have ducts that connect them directly to the upper inlet of the sample liquid and to the outlet of the displaced air in the upper part of the apparatus.

The dimensions of the reservoirs are calculated based on the total number of parts in which the sample is desired to be divided, the total sample volume and amount of air and sample liquid which is desired to be left in each of the reservoirs and also the desired geometric shape to be used for each reservoir wherein these may be identical or different from each other.

The height level on which said communicating ducts enter and exit in the reservoirs is determined by the required proportion or percentage of sample liquid and of air that is desired to remain in each of them, and even leave it without air. This level may be equal in all the reservoirs or different among them, depending on the needs of the user and is calculated taking into consideration the apparatus in upright position.

The communicating ducts may be located always on the same side in all the reservoirs so that when the apparatus is leant to the opposite side from that on which the ducts are located, the sample liquid is evacuated by effects of gravity from the communicating ducts and housed into the reservoirs, the sample liquid, besides being divided, is completely separated and left independent.

If the ratio of sample liquid and air needs to be varied, it is enough to vary the inclination angle of the apparatus when receiving the sample liquid.

### Background of the Invention

In the field of medicine, biology and microbiology, there are several analysis and culture techniques that require orderly separation of sample liquids into smaller parts and which in most cases require of hard work, are very time-consuming or require too sophisticated and expensive equipment for their realization.

Moreover, the diversity of organisms that can be studied is so great, and the requirements for the best development of each of them are as different as are their metabolic characteristics. Examples of these differences are the effect that 02 generates on their growth and metabolism. These properties are important for pathogenesis, and for the isolation and identification of the organism by being grouped as follows:
1.- strict aerobes: they need oxygen and lack the ability to perform fermentations.
2.- strict anaerobes that can grow only in the absence of oxygen.
3.- facultative organisms: growing both in the presence and absence of oxygen and under the presence of air pass into a breathing metabolism.
4.- aerotolerant anaerobes: which can grow in the presence or absence of oxygen, but their metabolism is always of a fermentative type.

That is why the presence or absence of air in their places of culture can be very important for the optimal development thereof.

In microbiology, the most commonly used methods for quantification of bacteria and other microorganisms in the water are those of Membrane filtration and the Most Probable Number (MPN) method. The first is somewhat more limited than the latter because of its quantifying difficulty when the number of colonies is very high. The NMP procedure is based on a statistical estimate of the number of bacteria per unit volume and is determined by the number of positive results of a series of incubated tubes or reservoirs. The greater the number of incubated reservoirs, the higher is the accuracy of the obtained results. Also, when bacteria counts are very high, this method allows to perform dilutions in order to find effective readings that allow to get a clear idea of the bacterial density of the sample liquid.

A simple and rapid method for separating the sample liquid into many small, homogeneous portions, as well as the ability of having or not, as the case may be, air in each of the culture reservoirs or compartments is useful for optimal results.

The bacterial density estimation by the NMP method can be done in two ways, one being by determining multiple tubes as described in "Standard Methods for the Examination of Water and Wastewater" using test tubes performing the manual separation of the sample liquid through pipettes or similar devices and also using the method described in Patents Nos. US 5,518,892, US 5,620,895, US 5,753,456. In said patents an apparatus is used for separation of the sample consisting of a bag in which the sample liquid is divided by the mechanical action of rollers that at the same time provide the necessary heat for adhering a film to the rigid side of the bag, thus achieving complete separation of the sample. This option does not allow the option of leaving a specific volume of air in each of the aliquots and also requires special equipment for separation and division.

The apparatus according to this patent contains the following differences:
It is an impermeable and rigid preformed duct which, by the sole action of gravity and movement of the air, performs the automatic distribution of sample liquid into two or more reservoirs leaving in each of the reservoirs (or compartments) a predetermined amount of liquid and air. It has the advantage that a determined volume of air may be left by simply varying the height of the displaced air outlet in each compartment, whereby it can be used for detecting microorganisms whose metabolism works best with or without oxygen (air volumes can vary from 0% to the percentage required to be present in said reservoirs).

Another advantage is that, for the case of the reservoirs containing sufficient air and further when the design of the reservoirs is appropriate, the liquid in each reservoir is separated from the rest by simply leaning or rotating the apparatus. The separation between the compartments could also be obtained by simply sealing the communicating ducts that the reservoirs have with each other by action of heat and pressure applied at specific points.

### Description of the drawings

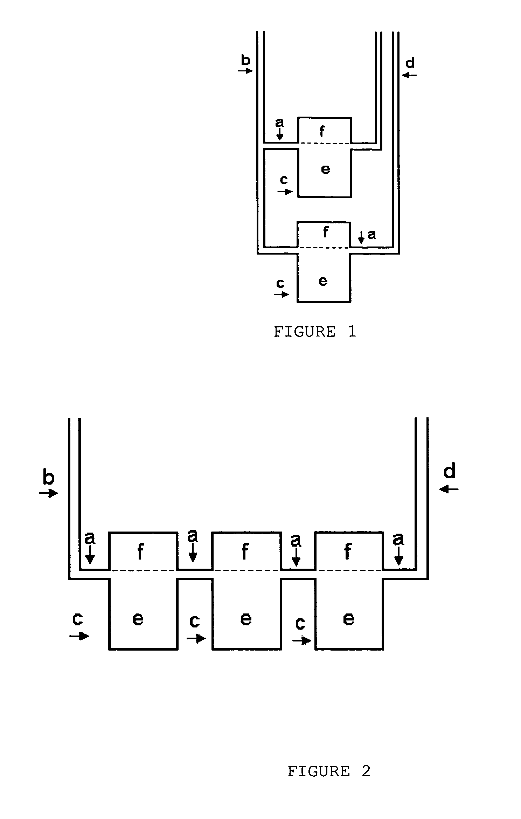

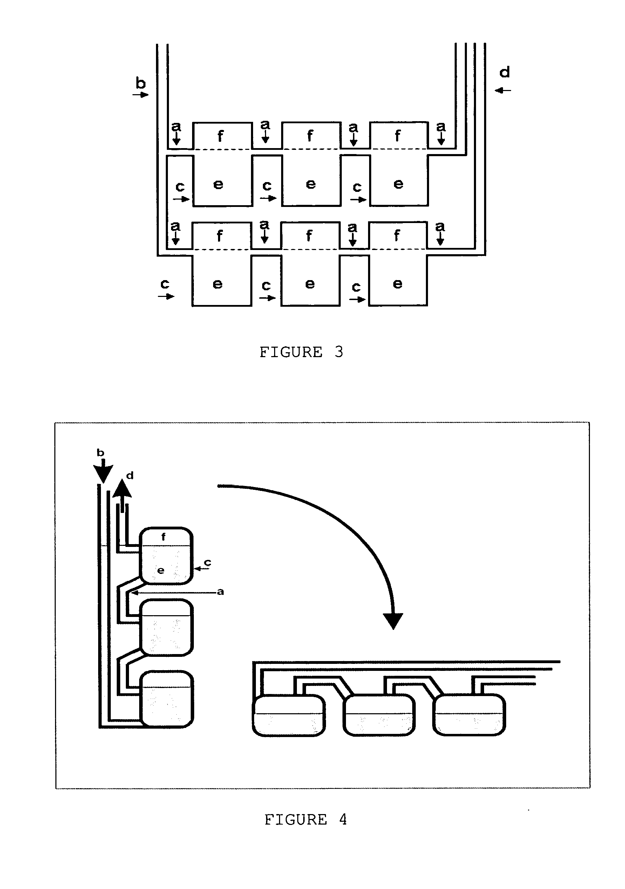

Figure 1.-A figure is shown with a vertical front view which depicts independent reservoirs having the following components:
   a.- communicating ducts
   b.- sample inlet duct.
   c.- independent reservoirs
   d.- displaced air outlet ducts
   e.- volume of sample liquid
   f.- air volume
Figure 2.- A figure is shown with a vertical front view of the duct with serial reservoirs depicting the following components:
   a.- communicating ducts
   b.- sample inlet duct.
   c.- serial reservoirs
   d.- displaced air outlet ducts
   e.- volume of sample liquid
   f.- air volume
Figure 3.- Shows that two or more series can be integrated to achieve a greater number of independent reservoirs, each series with its independent outlet duct.
Figure 4.- Shows the location, on one side, of the reservoirs. In order to evacuate the communicating ducts, they may be located on one side of the reservoirs so that when rotating the apparatus, the liquid contained therein is evacuated by the effects of gravity from the communicating ducts and housed in the reservoirs achieving additionally, apart from the division, the complete separation of the sample liquid.
Figure 5.- Shows a view of a first embodiment of the present invention.
Figure 6.- Shows a view of a second embodiment of the present invention.

### Detailed description of the invention

The invention consists of a preformed and rigid duct of impermeable material, with one inlet and one or more outlets wherein automatic distribution of sample liquids in reservoirs or compartments preformed in the same duct is achieved by the effects of gravity and air movement. The duct dimensions vary along the same, forming communicating ducts, bifurcations and reservoirs, which are located so as to allow a controlled flow of air and housing of the sample liquid in the reservoirs formed therein.

The duct is located so that the inlet and the outlet or outlets is/are at an upper level and below thereof, two or more reservoirs which are identical or different to each other can be located:
A) INDEPENDENTLY: Each reservoir has a communicating duct between itself and the sample liquid inlet as well as an outlet duct for displaced air which reaches the top part of the apparatus
B) BY FORMING SERIES: two or more reservoirs connected with each other by means of ducts where not all said reservoirs have ducts that connect them directly to the upper inlet of the sample liquid and to the outlet of the displaced air in the upper part of the apparatus. The arrangement of these series of reservoirs can be vertically, horizontally or combined according to the design of the apparatus.

Two or more series of reservoirs can be used in the same apparatus.

The dimensions of the reservoirs are calculated based on the total number of parts in which the sample is desired to be divided, the total sample volume and the amount of air and sample liquid which is desired to be left in each of the reservoirs and also the desired geometric shape to be used for each reservoir may be identical or different from each other.

The height level on which said communicating ducts enter and exit in the reservoirs is determined by the required proportion or percentage of sample liquid and of air that is desired to remain in each of them, and even leave it without air. This level may be equal in all the reservoirs or different among them, depending on the needs of the user and is calculated taking into consideration the apparatus in upright position.

The communicating ducts may be located always on the same side in all the reservoirs so that when the apparatus is leant to the opposite side from that on which the ducts are located, the sample liquid is evacuated by effects of gravity from the communicating ducts and housed into the reservoirs, the sample liquid, besides being divided, is completely separated and left independent.

If the ratio of sample liquid and air needs to be varied, it is enough to vary the inclination angle of the apparatus when receiving the sample liquid. The only prerequisite for this is that all the communicating ducts are in the same orientation.

Finally, from each reservoir located at the end considered from the duct allowing the flow of sample liquid to each series of interconnected reservoirs or separate reservoirs, another duct exits that rises to a higher level and serves to allow the exit of excess air from all the reservoirs of said series or reservoir.

The reservoirs must always be located below the level of the inlet to the duct and of the outlet or outlets thereof, regardless of the position.

The dimensions of the reservoirs and ducts, as well as the location of the inlets and outlets from the communicating ducts to the reservoirs are defined depending on the following variables;
1. The amount of sample to be analyzed
2. The number of reservoirs which is desired to be used, as well as the geometric shape.
3. The percentage or proportion of air that is desired to be left in each reservoir
4. Additionally whether the definitive closure of the communicating ducts will be required.

Hence:

The dimensions of length, width and height of each reservoir and of the ducts can be adjusted to the dimensions most suitable for the production process, geometric shape or desired design, as long as they have the required volume including the amount of air required for each reservoir and taking into consideration the apparatus in the upright position.

The sum of the volume of the ducts, reservoirs (whether or not equal to each other), is equal to the total sample volume plus the desired air percentage.

The height at which the upper part of the communicating ducts of each reservoir is located is determined by obtaining the height level that the sample liquid will cover in each reservoir taking into account the volume of sample liquid contained in the ducts, placing the latter preferably on the same side of the reservoirs in all cases.

The duct is placed vertically, with the sample liquid inlet on the top part. The sample liquid is poured into the duct and by the effects of gravity it is distributed in each of the minor reservoirs through the lower communicating ducts. The air contained therein is displaced by the liquid and exits through the ascending communicating ducts, thus allowing the defined filling of each of the reservoirs.

In the case of reservoirs which are desired to contain air and when it is necessary to achieve the separation of the samples without the use of other additional equipment, the width of the reservoirs must be sufficient and proportionally greater than their length, so that only by leaning the apparatus, the communicating ducts are in the upper part thereof, causing the sample liquid located in the ducts to be removed by effect of gravity from the same and to be located in the reservoirs where the final volume of sample liquid from each reservoir does not reach the level at which the communicating ducts are located, thus achieving, apart from the division, the separation of the sample liquid. Similarly, the reservoirs could be isolated definitively by blocking the passage of all the communicating ducts using an apparatus that applies heat and pressure exclusively to specific points of the communicating ducts.

### Preferred example embodiments of the invention

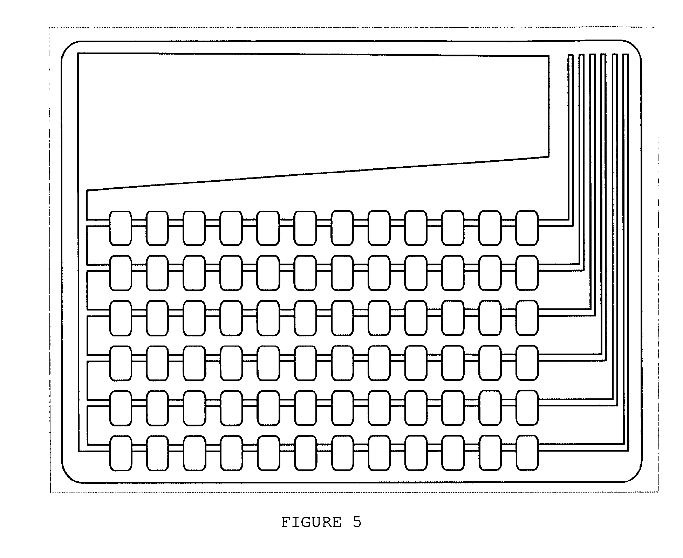

### Example 1 (FIGURE 5) of an apparatus for quantification of aerobic and anaerobic facultative bacteria through the 72 reservoir NMP.

An example of this apparatus is a duct of a material such as thermoplastic or thermosetting polyvinyl chloride (PVC), polyethylene terephthalate (PET), polyester, ethylene vinyl acetate (EVA), polyethylene (PE), polypropylene (PP) or similar, or a combination of these, transparent, composed of two plates, one of which has a portion of the duct thermoformed with the desired dimensions and shapes and the other complementary plate, attached to the first one, concluding the shape of the duct.

The design of the duct in the thermoformed plate includes: a major reservoir for the distribution of liquid which is on the top part and with a volume of 100 ml and that in turn has an upper opening through which the sample liquid is to be introduced.

It further has 72 equal reservoirs located at 6 levels, each level with a series of 12 reservoirs. Each reservoir has a volume of 1.95 ml and the following dimensions 1 cm x 1.2 cm x 1.625 cm. The reservoirs of each level are joined to its neighbor by means of communicating ducts in the form of half-tube with a diameter of 0.7 cm and which are located at a height of 1.15 cm from the bottom of the reservoir, allowing each reservoir to contain a volume of 1.38 ml of sample liquid and an air percentage of 30%. The first reservoir of each series is connected via a duct with a diameter of 0.7 cm to one of two vertical ducts with a diameter of 0.7 and which in turn are joined to the major reservoir, the first of these for the first two series and the second one for the remaining. From the last of the minor reservoirs, and at the same height as the other communicating ducts, a communicating duct exits in the shape of a half-tube and of 0.3 cm in diameter, towards the top part of the plate which allows the exit of excess air thus allowing the flow of sample liquid through the reservoirs of the same level.

This thermoformed plate is joined by means of heat and/or pressure and/or an adhesive to a complementary plate, the two parts being joined together forming a rigid and impermeable duct.

Finally the contour is cut by means of a die cut and the communicating ducts that facilitate the exit of air as well as the entrance of sample liquid to the upper reservoir are opened to the outside. Once finished, it is sterilized for conducting tests such as those of NMP using specific reagents for each microorganism type.

The apparatus is placed vertically, with the major reservoir and sample liquid inlet on the top part. The sample liquid is poured into said reservoir and by the effects of gravity and movement of air it is distributed in each of the minor reservoirs through the communicating ducts. The sample liquid in each minor reservoir remains at the bottom allowing the desired percentage of air to remain therein by being above the level at which the communicating ducts are located. The excess air contained therein exits through the communicating ducts to the adjacent reservoir and ultimately to the ducts rising on one side of the upper reservoir allowing the distribution of the sample liquid into the minor reservoirs.

Once the sample has been distributed to all reservoirs and the sample liquid flow has stopped, in order to prevent sample liquid contact between the different reservoirs, the apparatus only needs to be leant placing the communicating ducts on the top part which will cause the remaining air in each reservoir to isolate the liquid from the same by avoiding contact with the liquid of adjacent reservoirs. Similarly, the reservoirs could be definitively isolated by blocking the passage of all communicating ducts using an apparatus that applies heat and pressure exclusively to specific points of the communicating ducts.

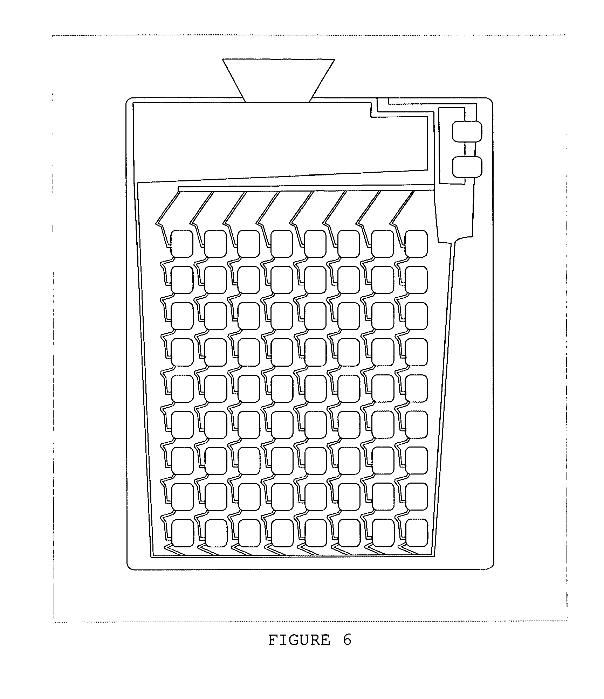

### Example 2 (FIGURE 6) of an apparatus for quantization of aerobic and anaerobic facultative bacteria through the 75 communicated, independent reservoir NMP

An example of this apparatus is a duct of a material such as thermoplastic or thermosetting polyvinyl chloride (PVC), polyethylene terephthalate (PET), polyester, ethylene vinyl acetate (EVA), polyethylene (PE), polypropylene (PP) or similar, or a combination of these, or even coextruded and mixtures or the like, transparent, composed of two plates, one of which has a portion of the duct thermoformed with the desired dimensions and shapes and the other complementary plate, attached to the first one, concluding the shape of the duct.

The design of the duct in the thermoformed plate includes: a major reservoir for the distribution of the liquid which is on the top part and with a volume of 100 ml and that in turn has an upper opening through which the sample liquid is to be introduced.

It further has 72 equal reservoirs located in 8 columns, each column with a series of 9 reservoirs and 3 additional reservoirs. Each reservoir has a predetermined volume with a specific liquid and air ratio. The reservoirs of each level are attached to a contiguous reservoir through communicating ducts that are located at a predetermined height with respect to the lower part of the reservoir which allows each reservoir to contain a specific volume of sample liquid and percentage of air. The first reservoir of each series is attached via a duct to the horizontal part of the main distribution duct exiting from the major reservoir. From the last minor reservoir of each series and at the same height as the other communicating ducts, a communicating duct exits which is connected to the main air outlet duct and from there to the top part of the apparatus allowing the exit of excess air thereby allowing the flow of sample liquid through the reservoirs.

This thermoformed plate is joined by means of heat and/or pressure and/or an adhesive to a complementary plate, the two parts being joined together forming a rigid and impermeable duct.

Finally the contour is cut by means of a die cut and the entrance through which sample liquid is poured to the upper reservoir and the communicating duct that facilitates the exit of air are opened to the outside. Once finished, it is sterilized for conducting tests such as those of NMP using specific reagents for each microorganism type.

The apparatus is placed vertically, with the major reservoir and sample liquid inlet at the top. The sample liquid is poured into said reservoir and by the effects of gravity and movement of air it is distributed in each of the minor reservoirs in the different levels through the communicating ducts. The sample liquid in each minor reservoir remains at the lower part allowing the desired percentage of air to remain therein by being above the level at which the communicating ducts are located. The excess air contained therein exits through the communicating ducts to the reservoir located above it and ultimately through the ducts rising to the main air exit duct allowing the distribution of the sample liquid into the minor reservoirs.

Once the sample has been distributed to all reservoirs and the sample liquid flow has stopped, in order to prevent sample liquid contact between the different reservoirs, the apparatus only needs to be rotated, placing the communicating ducts on the top part which will cause the sample liquid contained in the communicating ducts between the reservoirs to flow and be deposited in the corresponding compartment leaving said duct free from liquid. The sample liquid contained in the main distribution duct is distributed into the three additional reservoirs. Finally, the apparatus is leant with the reservoir facing down placing the reservoirs on the upper face. Likewise, the reservoirs could be definitively isolated by blocking the passage of all the communicating ducts using an apparatus that applies heat and pressure exclusively to specific points of the communicating ducts.

If the liquid to air ratio is desired to be varied in each reservoir, the inclination of the apparatus only need to be varied from the vertical when pouring the sample liquid.

It is noted that with respect to this date the best method known by the applicant for implementing the above invention, is the one that is clear from the present description of the invention.

## Claims

1. Apparatus for distributing sample liquids in small volumes, comprising a preformed rigid duct of impermeable material with one inlet and one or more outlets, **characterized in that** the duct dimensions vary along the same, forming communicating ducts, bifurcations and reservoirs.

2. The apparatus for distributing sample liquids in small volumes according to claim 1, **characterized in that** each reservoir has inlet ducts communicating it with the sample liquid inlet duct and/or with other reservoirs, as well as outlet ducts communicating it to other reservoirs and/or to an outlet duct.

3. The apparatus for distributing sample liquids in small volumes according to claim 1, **characterized in that** two or more reservoirs communicate with each other in series by means of ducts.

4. The apparatus for distributing sample liquids in small volumes according to claim 1, **characterized in that** the duct is located so that the inlet and the outlet or outlets is/are at a higher level and below it there are two or more reservoirs.

5. The apparatus for distributing sample liquids in small volumes according to claim 1, **characterized in that** it is manufactured from materials selected from thermoplastic or thermosetting polyvinyl chloride (PVC), polyethylene terephthalate (PET), polyester, ethylene vinyl acetate (EVA), polyethylene (PE), polypropylene (PP) or the like, or a combination thereof, that meets the characteristics.

6. Use of the apparatus for distributing sample liquids in small volumes according to claim 1, **characterized in that** the sample liquid is poured into the top part of the duct and by the effects of gravity and movement of air it is distributed into each of the minor reservoirs through the communicating ducts, the sample liquid enters each minor reservoir and remains in the bottom thereof allowing the determined air percentage to remain inside thereof by locating the outlet ducts at the desired height, the excess air contained therein, as well as the rest of the sample liquid, exits through the communicating ducts to the inlet of another reservoir and finally through the outlet ducts that rise to the top part, thus allowing the desired distribution in each of the minor reservoirs.

7. Process for manufacturing the apparatus for distributing sample liquids in small volumes according to claim 1, **characterized by** comprising: forming a thermoformed plate from thermoplastic or thermosetting polyvinyl chloride (PVC), polyethylene terephthalate (PET), polyester, ethylene vinyl acetate (EVA), polyethylene (PE), polypropylene (PP) or the like, or a combination thereof, compliant with the characteristics, including the duct, and in turn communicating ducts, bifurcations and reservoirs, which is attached to a complementary plate by heat and/or pressure and/or an adhesive, by being attached together forming a rigid and impermeable duct, the contour is cut by means of a die cut and the communicating ducts are opened to the outside.
